(19) Europäisches Patentamt
European Patent Office
Office européen des brevets

(11) **EP 1 758 368 A1**

(12) **EUROPEAN PATENT APPLICATION**
published in accordance with Art. 158(3) EPC

(43) Date of publication:
**28.02.2007 Bulletin 2007/09**

(51) Int Cl.:
*H04N 1/405* (2006.01)   *B41J 2/52* (2006.01)
*G06T 5/00* (2006.01)

(21) Application number: **05737323.5**

(22) Date of filing: **06.05.2005**

(86) International application number:
**PCT/JP2005/008342**

(87) International publication number:
**WO 2005/109851 (17.11.2005 Gazette 2005/46)**

(84) Designated Contracting States:
**AT BE BG CH CY CZ DE DK EE ES FI FR GB GR
HU IE IS IT LI LT LU MC NL PL PT RO SE SI SK TR**

(30) Priority: **06.05.2004 JP 2004137326**

(71) Applicant: **SEIKO EPSON CORPORATION
Shinjuku-ku,
Tokyo 163-0811 (JP)**

(72) Inventor: **KARITO, Nobuhiro;
c/o Seiko Epson Corporation,
3928502 (JP)**

(74) Representative: **Siegert, Georg
Hoffmann - Eitle
Patent- und Rechtsanwälte
Arabellastrasse 4
81925 München (DE)**

(54) **IMAGE PROCESSING DEVICE, IMAGE PROCESSING METHOD, AND PROGRAM**

(57) It is an object of the present invention to provide an image processing device and image processing method which produce stable dots without any deterioration in image quality by preventing the generation of isolated dots, and which have a rapid processing speed of half-tone processing. An image processing device, which converts input image data into output image data having two or more types of level values, and which outputs this output image data, comprises a center-of-gravity position determining unit which determines the position of the center of gravity, on the basis of a predetermined pixel group, from the input image data for the respective pixels contained in the pixel group, and an application unit which applies the level values to pixels on the basis of the position of the center of gravity determined by the center-of-gravity position determining unit.

FIG. 5

START — S10

READILNG IN OF INPUT IMAGE — S11

REPEATED BLOCK SET AT UPPER LEFT OF INPUT IMAGE, AND N ← 1 — S12

REFERENCE MADE TO ALL PIXELS CONTAINED IN NTH CELL WITHIN BLOCK — S13

CALCULATION OF TOTAL OF TONE VALUES OF REFERENCE PIXELS — S14

CALCLATION OF CENTER OF GRAVITY OF REFERENCE PIXELS — S15

DOT GENERATION PROCESSING — S16

$N=N_{MAX}$? — S17   NO   S18   N←N+1

YES

② ①

EP 1 758 368 A1

**Description**

CROSS REFERENCE TO RELATED APPLICATIONS

This application is a continuation of International Application No.PCT/JP2005/008342, filed on May 6, 2005, now pending, herein incorporated by reference. Further, this application is based upon and claims the benefit of priority from the prior Japanese Patent Application No. 2004-137326, filed on May 6, 2004, the entire contents of which are incorporated herein by reference.

TECHNICAL FIELD

The present invention relates to the halftone processing of tone image data in an image processing device such as a later printer or the like. More specifically, the present invention relates to halftone processing which is devised so that the position of the center of gravity is determined using a predetermined cell from the tone values of the pixels contained in this cell, and dots are produced in this position of the center of gravity in an amount corresponding to the sum of the tone values of the pixels within the cell.

BACKGROUND ART

Conventionally, image processing devices such as printers and the like have been devised so that in the case of tone data having multi-value tone values for respective pixels, the data is converted into binary values that express the presence or absence of dots, and is printed on printing paper. Generally, processing that converts multi-value tone values into binary values is referred to as halftone processing.

Such halftone processing includes processing (hereafter referred to as the "CAPIX method") in which pixels are searched in a specified order until specified tone values have been accumulated, and the accumulated tone values are redistributed in order from the pixels with the largest input tone values (for example, see non-patent Reference 1: Shunsei Kurozawa et al., "Quasi-intermediate Halftone Processor Using peripheral concentration integration and redistribution method (CAPIX method)", Gazo Denshi Gakkaishi, Vol. 17, No. 5 (1988)).

Furthermore, halftone processing is also known in which pixels are selected in a specified order until the total of the tone values of the respective pixels reaches a specified threshold value, so that a pixel group (hereafter referred to as a "cell") is formed, and a dot is produced in the central position of this cell (e.g., see patent Reference 1: Japanese Patent Application Laid-Open No. 11-27528).

Moreover, there is also processing in which a cell is formed while selecting pixels in positions closest to the position of the center of gravity until a threshold value is reached, and a dot is produced in the position of the center of gravity within the cell, but the threshold value is varied in accordance with the input tone values (e.g., see patent Reference 2: Japanese Patent Application No. 2003-352270).

Furthermore, there is also halftone processing depending on so-called dot processing, which is devised so that dots are produced by comparing the input tone values and a threshold value matrix (conversion table) consisting of a specified size.

DISCLOSURE OF THE INVENTION

Problems to Be Solved by the Invention

However, in the abovementioned CAPIX method, in cases where pixels with a large input tone value are present in a scattered manner, the accumulated tone values are distributed in accordance with the input tone values, so that the dots are also present in a scattered manner. When such isolated dots are reproduced by a laser printer, stable dots cannot always be reproduced. The reason for this is that the adhesion of toner to the photosensitive drum is more stable in the case of dots of a uniform size. Such unstable dots are a cause of image deterioration.

Furthermore, in the abovementioned Japanese Patent Application Laid-Open No. 11-27528, the system is devised so that pixels are selected and cells are formed until the total of the tone values reaches "255"; this system is devised so that dots are produced in the pixels positioned in the center. Accordingly, since the system is devised so that dots for a single pixel are produced, isolated dots are similarly generated, so that the reproduction of the dots is unstable.

Meanwhile, in the abovementioned Japanese Patent Application No. 2003-352270, the system is devised so that dots of a stable size are produced by varying the threshold value required for cell construction in accordance with the input tone values. However, the position of the center of gravity must be calculated a number of times in order to select the pixels that form the cells, so that the problem of delayed halftone processing arises.

Furthermore, in regard to the abovementioned dot processing as well, in regions where continuous input tone values are present, there are cases in which isolated dots are generated by the threshold values compared within the threshold value matrix.

Accordingly, it is an object of the present invention to provide an image processing device and image processing method which produce stable dots with no image deterioration by preventing the generation of isolated dots, and which have a rapid processing speed of halftone processing.

Means Used to Solve the Problems

In order to achieve the abovementioned object, the present invention provides an image processing device which converts input image data into output image data that has two or more types of level values, and outputs the output image data, this image processing device having a center-of-gravity position determining unit which determines the position of the center of gravity on the basis of a predetermined pixel group from input image data for the respective pixels contained in this pixel group, and an application unit which applies level values to the pixels on the basis of the position of the center of gravity determined by the center-of-gravity position determining unit. As a result, for example, since the pixel group is determined beforehand, the processing is rapid, and since level values that produce dots are applied to the pixels on the basis of the position of the center of gravity, the dots are concentrated, and the generation of isolated dots can be prevented.

Furthermore, the present invention also provides the abovementioned image processing device further having a pulse width modulation unit which produces K stages (K is a positive integer) of pulse widths for N types of level values applied by the application unit. As a result, for example, halftone processing that allows the expressing of a greater number of tones can be realized.

Furthermore, the present invention also provides the image processing device wherein the center-of-gravity position determining unit calculates the product of the pixel positions of the respective pixels and the level values of the input image data for the respective pixels for all of the pixels contained in the pixel group, and determines the value obtained by dividing the sum of these by the total value of the level values of the input image data for the respective pixels contained in the pixel group as the position of the center of gravity. As a result, for example, the position of the center of gravity containing the tone values of the respective pixels can easily be calculated.

Furthermore, the present invention also provides the image processing device wherein the application unit preferentially selects level values from pixels that are close to the position of the center of gravity, and applies level values to the selected pixels. As a result, for example, since level values are applied in order from pixels that are close to the position of the center of gravity, the generation of isolated dots can be prevented.

Furthermore, the present invention also provides the image processing device wherein the application unit is devised so that when the application unit applies a level value to the pixel that is closest to the position of the center of gravity, if there is a remainder in the level value after the applied level value is subtracted from the total value of the level values of the respective pixels contained in the pixel group, the remaining level value is applied to the pixel that is closest to the position of the center of gravity other than the pixel to which the level value is applied. As a result, for example, dots that grow from the position of the center of gravity are generated, so that dots that are coherent to some extent are generated; accordingly, the generation of isolated dots is prevented.

Furthermore, the present invention also provides the image processing device wherein in cases where the remaining level value is not a level value of any of N types that cause the generation of dots for a single pixel, the application unit applies the remaining level value to the pixel, which is contained in the pixel group, and which is closest to the position of the center of gravity other than the pixel to which a level value of any of N types has been applied.

Moreover, the present invention also provides the image processing device wherein the center-of-gravity position determining unit determines the pixel group beforehand by holding coordinate positions of the respective pixels contained in the pixel group. As a result, for example, since there is no need to calculate the position of the center of gravity a number of times in order to construct the cell, an image processing device that performs rapid halftone processing can be provided.

Furthermore, the present invention also provides the image processing device wherein the respective pixels contained in the pixel group are adjacent to each other. As a result, for example, since the cell has a coherent area, the generation of isolated dots can be prevented; furthermore, since the amount of position information for the pixels that construct the cell can be reduced, the required memory capacity can be reduced.

Furthermore, in order to achieve the abovementioned object, the present invention provides an image processing method having the steps of: a center-of-gravity position determination step which determines the position of the center of gravity, on the basis of a predetermined pixel group, from input image data for the respective pixels contained in the pixel group; and an application step which applies level values to the pixels on the basis of the position of the center of gravity determined in the center-of-gravity position determination step. As a result, for example, since the pixel group is determined beforehand, processing is fast, and since level values that generate dots are applied to the pixels that are closest to the position of the center of gravity, the dots are concentrated so that the generation of isolated dots can be prevented.

Furthermore, in order to achieve the abovementioned object, the present invention provides a program for processing that converts input image data into output image data having two or more types of level value, and outputs the output image data, the program causing a computer to execute: a center-of-gravity position determining processing which determines the position of the center of gravity on the basis of a predetermined pixel group from input image data for the respective pixels contained in the pixel group, and an application processing which applies level values to the pixels on the basis of the position of the center of gravity determined by the center-of-gravity position determining processing. As a result, for example, since the pixel group is determined beforehand, the processing is fast, and since level values that generate dots are applied to the pixel that is closest to the position of the center of gravity, processing in which the dots are concentrated so that isolated dots are not generated can be executed by the computer.

Furthermore, in order to achieve the abovementioned object, the present invention provides a dot image generating device which generates dot images by converting input image data into output image data that has two ore more types of level values, having: a center-of-gravity position determining unit which determines the position of the center of gravity on the basis of a predetermined pixel group from the input image data for the respective pixels contained in this pixel group; and an application unit which applies the level values to the pixels on the basis of the position of the center of gravity determined by the center-of-gravity position determining unit. As a result, for example, dot images that are rapidly processed are produced, and the generation of isolated dots is prevented; furthermore, the resolution is improved, and an output that is faithful to the input tone values is obtained.

Furthermore, in order to achieve the abovementioned object, the present invention provides a dot image generating method which generates dot images by converting input image data into output image data having two or more types of level values, the steps of: a center-of-gravity position determination step which determines the position of the center of gravity, on the basis of a predetermined pixel group, from input image data for the respective pixels contained in this pixel group; and an application step which applies the level values to the pixels on the basis of the position of the center of gravity determined in the center-of-gravity position determination step. As a result, for example, dot images that are rapidly processed are produced, and the generation of isolated dots is prevented; furthermore, the resolution is improved, and an output that is faithful to the input tone values is obtained.

Moreover, in order to achieve the abovementioned object, the present invention provides a program for dot image determining processing that generates dot images by converting input image data into output image data having two or more types of level values, the program causing a computer to execute: a center-of-gravity position determining processing which determines the position of the center of gravity, on the basis of a predetermined pixel group, from input image data for the respective pixels contained in this pixel group, and application processing which applies level values to the pixels on the basis of the position of the center of gravity determined in the center-of-gravity position determining processing. As a result, for example, dot images that are rapidly processed are produced, and the generation of isolated dots is prevented; furthermore, the resolution is improved, and processing that obtains an output that is faithful to the input tone values can be realized by means of a computer.

Moreover, in order to achieve the abovementioned object, the present invention provides an image processing device having: an assigning unit which assign predetermined cells containing a plurality of pixels of input image data to input image data; a determining unit which determines the position of the center of gravity within the cell from the tone values of the plurality of pixels within the cell; and generating unit which dots corresponding to the sum of the tone values of the plurality of pixels within the cell in at least pixels containing the position of the center of gravity. As a result, for example, the generation of isolated dots can be prevented, and an image processing device with fast processing can be provided.

BRIEF DESCRIPTION OF THE DRAWINGS

Fig. 1 is a diagram showing the overall construction of a system using the present invention;
Fig. 2 is a diagram showing the concrete construction of the image processing device;
Fig. 3A is a diagram showing an example of a cell block;
Fig. 3B is a diagram showing an example of a cell block;
Fig. 3C is a diagram showing an example of a cell block;
Fig. 3D is a diagram showing an example of a cell block;
Fig. 4 is a diagram used to illustrate types of cell blocks used for the input images;
Fig. 5 is a flow chart showing the operation of processing in the present invention;
Fig. 6 is a flow chart showing the operation of processing in the present invention;
Fig. 7 is a flow chart showing the operation of dot generating processing;
Fig. 8A is a diagram showing an example of the input buffer region 261;

Fig. 8B is a diagram showing an example of the output buffer region 262;
Fig. 9A is a diagram showing an example of the output buffer region 262;
Fig. 9B is a diagram showing an example of the output buffer region 262;
Fig. 10A is a diagram showing an example of the input buffer region 261;
Fig. 10B is a diagram showing an example of the output buffer region 262;
Fig. 11A is a diagram showing an example of the output buffer region 262;
Fig. 11B is a diagram showing an example of the output buffer region 262;
Fig. 12A is a diagram showing an example of the cell block;
Fig. 12B is a diagram showing an example of the cell block;
Fig. 13 is a diagram showing an example of the cell block; and
Fig. 14 is a diagram showing the overall construction of another system using the present invention.

## BEST MODE FOR CARRYING OUT THE INVENTION

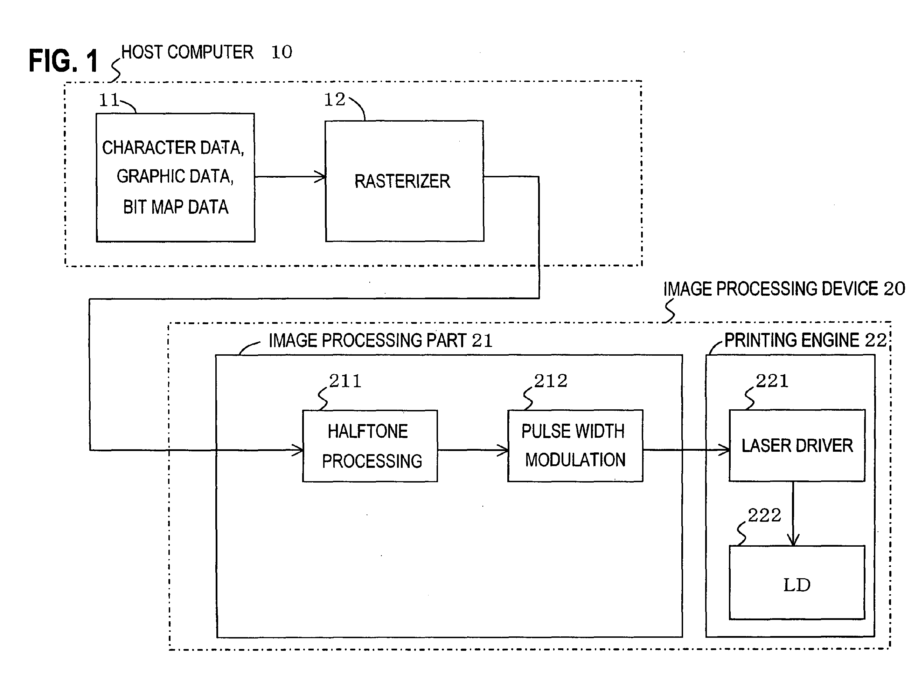

The best mode for carrying out the present invention will be described below with reference to the attached figures. Fig. 1 is a diagram showing the overall construction of a system using the present invention. Overall, this system is constructed from a host computer 10 and an image processing device 20.

The host computer 10 is constructed from an application part 11 and a rasterizing part 12. Data that is the object of printing, such as character data, graphic data, bit map data and the like, is produced in the application part 11. For example, in the host computer 10, character data, graphic data or the like is produced by the operation of a keyboard or the like using an application program such as a word processor, graphic tool or the like. The data thus produced is output to the rasterizing part 12.

In the rasterizing part 12, printing object data that is output from the application part 11 is converted into 8-bit tone data for each pixel (or each dot). Accordingly, the system has tone value (level values) from 0 to 255 for the respective pixels. The production of tone data in the rasterizing part 12 is actually accomplished by performing processing by means of a driver that is installed in the host computer 10. The tone data that is output from the rasterizing part 12 is output to the image processing device 20. In the present embodiment, furthermore, this tone data will be described below as monochromatic data.

The image processing device 20 as a whole is constructed from an image processing part 21 and a printing engine 22. The image processing part 21 is constructed from a halftone processing part 211 and a pulse width modulating part 212. In the halftone processing part 211, tone data that is output from the host computer 10 is converted into multi-value (binary or greater) values (level values), and quantized data is output. The quantized data that is output from the halftone processing part 211 is input into the pulse width modulating part 212, and the pulse width modulating part 212 produces driving data for this quantized data that indicates the presence or absence of a laser driving pulse for each dot. The driving data thus produced is output to the printing engine 22.

The printing engine 22 is constructed from a laser driver 221 and a laser diode (LD) 222. The laser driver 221 inputs driving data from the pulse width modulating part 212, produces control data that indicates the presence or absence of a driving pulse on the basis of this driving data, and outputs this control data to the laser diode 222. The laser diode 222 is driven on the basis of the control data output from the laser driver 221; furthermore, a photosensitive drum and transfer belt not shown in the figures are driven, so that data from the host computer 10 is actually printed on a recording medium such as printing paper or the like.

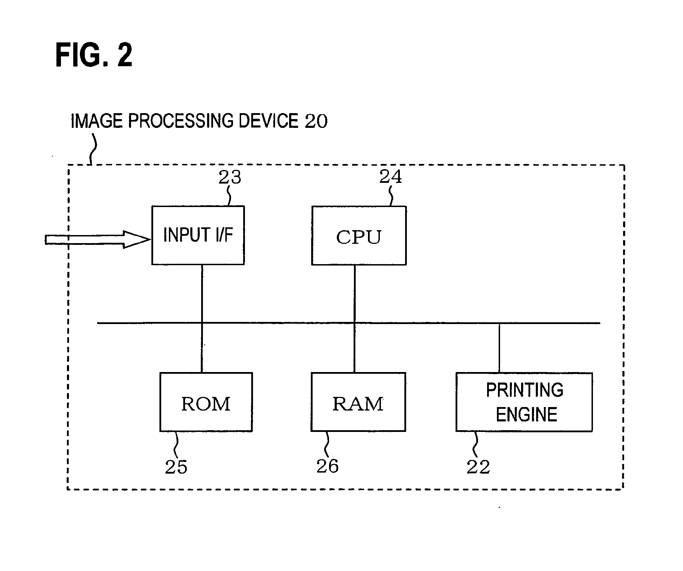

Next, the concrete construction of the image processing device 20 will be described with reference to Fig. 2. Here, in the image processing device 20 shown in Fig. 1, the halftone processing part 211 and pulse width modulating part 212 correspond to the CPU 24, ROM 25 and RAM 26 in Fig. 2.

The image processing device 20 is constructed from an input interface (I/F) 23, CPU 24, ROM 25, RAM 26 and printing engine 22. These parts are connected to each other via a bus. The input I/F 23 acts as an interface between the host computer 10 and image processing device 20. The input I/F 23 inputs tone data from the host computer 10 that is transmitted by a specified transmission system, and converts this into data that can be processed by the image processing device 20 under the control of the CPU 24. The input tone data is temporarily stored in the RAM 26.

The CPU 24 is connected to the input I/F 23, ROM 25, RAM 26 and printing engine 22 via the bus; this CPU appropriately reads out programs stored in the ROM 26, and performs various types of processing such as halftone processing and the like. Details will be described later.

The RAM 26 acts as a working memory for the various types of processing performed by the CPU 24; various types of data (during and after processing) are stored in this RAM 26. Furthermore, driving data that is used to drive the laser driver 221 of the printing engine 22 is also stored in this RAM 26.

The printing engine 22 has the same construction as that of the printing engine shown in Fig. 1; this printing engine 22 inputs the driving data stored in the RAM 26 under the control of the CPU 24, and performs the abovementioned printing processing.

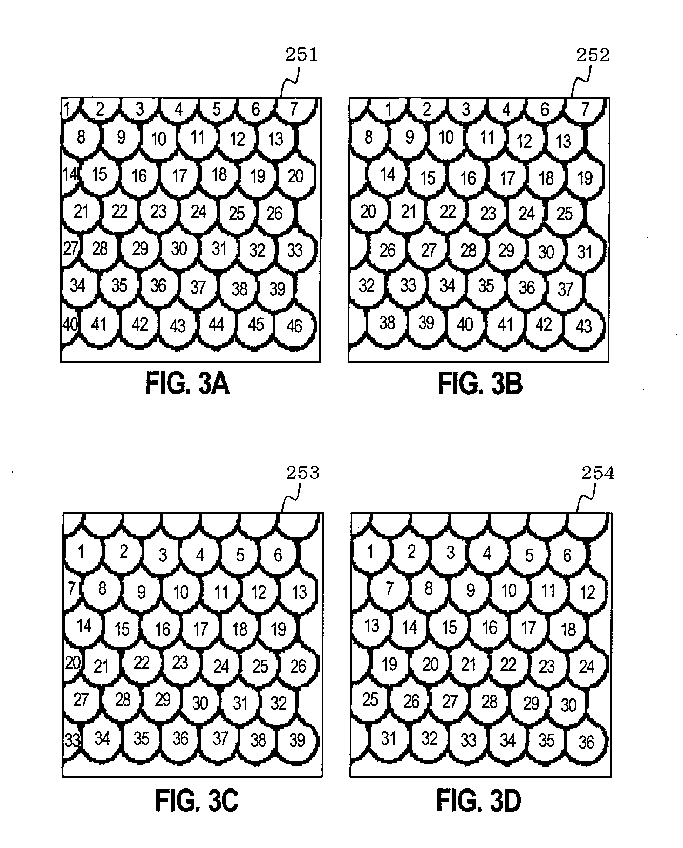

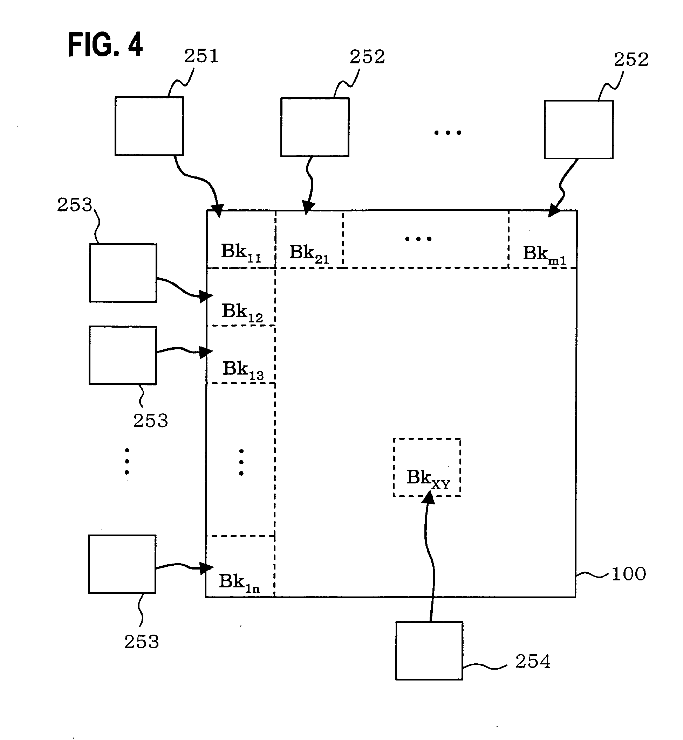

Next, the halftone processing of the present invention will be described in detail with reference to the attached figures. First of all, an outline of the present invention will be described briefly with reference to Figs. 3 and 4. First, four types of cell blocks are prepared as shown in Fig. 3. Specifically, these are the cell block 251 for the upper left end shown in Fig. 3A, the cell block 252 for the upper end shown in Fig. 3B, the cell block 253 for the left end shown in Fig. 3C, and the cell block 254 for ordinary regions shown in Fig. 3D.

A plurality of cells (indicated by thick lines in the figures) are present in the respective cell blocks 251 through 254. Furthermore, a plurality of input pixels are present inside the respective cells of the cells blocks 251 through 254, and processing that is used to generate dots is carried out by determining the position of the center of gravity in the respective cells.

These four cell blocks 251 through 254 are prepared as shown in Fig. 4 for the input images 100 of 1 page (or 1 frame). Specifically, the cell block 251 for the upper left end is prepared for the upper left end block $Bk_{11}$ of the input images 100, and the cell block 252 for the upper end is prepared for the upper end block $Bk_{21}$ through $Bk_{m1}$ ($m \geq 2$) of the input images 100. Furthermore, the cell block 253 for the left end is prepared for the left end block $Bk_{12}$ through $Bk_{1n}$ ($n \geq 2$) of the input images 100, and the cell block 254 for ordinary regions is prepared for other blocks $Bk_{XY}$ ($2 \leq X \leq m$, $2 \leq Y \leq n$) of the input images 100.

Here, returning to Fig. 3, the right half of the seventh cell in the upper part of the cell block 251 for the upper end is contained in the cell block 252 that is adjacent on the right; accordingly, no cell number is assigned to the left side of the first cell at the upper left of the cell block 252 for the upper end, and processing is not performed inside the cell block 252 for the upper end. The reason for this is that if this seventh cell is divided in two, and processing is separately performed in the cell block 251 for the upper left end and the cell block 252 for the upper end, dots will be separately impressed, thus leading to the generation of isolated dots. Accordingly, in the case of cells that straddle two cell blocks, processing is performed in one of these cell blocks. This means that cells positioned at the very bottom of the cell block 251 for the upper left end, cells positioned at the very top of the cell block 253 for the left end and the like are generated between the respective cell blocks 251 through 254.

Such cell blocks 251 through 254 are applied to the input images 100, the position of the center of gravity corresponding to the input tone values are determined within predetermined cell frames in the respective blocks 251 through 254, and values indicating dot production (e. g., "255") are assigned to pixels positioned at the abovementioned center of gravity. In this case, when values indicating dot production are further assigned in accordance with the total of the tone values within the cells, such values are assigned to the pixels that are furthest from the center of gravity.

Since processing which causes dots to be concentrated in the position of the center of gravity in accordance with the total value of the tone values of the pixels within the cells in the calculation of the position of the center of gravity, the generation of isolated dots is suppressed, so that dots of a certain size tend to be generated. Accordingly, stable dots are generated so that images with no deterioration in image quality can be reproduced. Furthermore, when the cells are constructed, cells that are predetermined in the cell blocks 251 through 254 are used instead of determining the pixels that are to be incorporated into the cells by calculating the position of the center of gravity each time; accordingly, processing time required for cell construction is eliminated, so that processing can be accelerated by a corresponding amount.

Furthermore, In the case of conventional dot processing, threshold values and input tone values are compared in respective dot cells (threshold value matrix); however, it appears that isolated dots are generated due to the generation or lack of generation of dots according to the threshold value and the like. In the present invention, on the other hand, since the system is devised so that tone values are collected from the surrounding pixels and dots are generated from the position of the center of gravity, stable dots can be reproduced compared to dot processing.

Furthermore, in the case of the present invention (compared to conventional dot processing), the resolution is improved, so that an output that is faithful to the input tone values can be obtained. Specifically, in the case of conventional dot processing, the positions of the dots (dots) are fixed; accordingly, the resolution deteriorates to the extent of the period of the dots; for example, problems are encountered such as the occurrence of jaggy in which characters are jagged, the difficulty of reading small light characters and the like. In the present invention, dots are formed by generating dots in the position of the center of gravity; accordingly, the reproducibility of fine lines and edges is improved, so that jaggy does not occur, small light characters are easy to read, and dot images with a high resolution can be produced. Moreover, in the case of conventional dot processing, the following problems arise: namely, input tone values are cut and discarded by a large threshold value, so that fine lines cannot be reproduced, or conversely, input tone values are cut upward to "255" indicating dot generation, and are converted into thick lines, so that input tone values and output tone values do not coincide. In the present invention, dots having the same tone values as the total of the tone values contained in the cells are produced, so that an output that is faithful to the tone values of the input image can be obtained. Furthermore, in light of the above discussion, the present invention may be said to produce absolutely the same effect not only when applied to the image processing device shown in Fig. 1, but also when applied to a dot image processing device that has the same function.

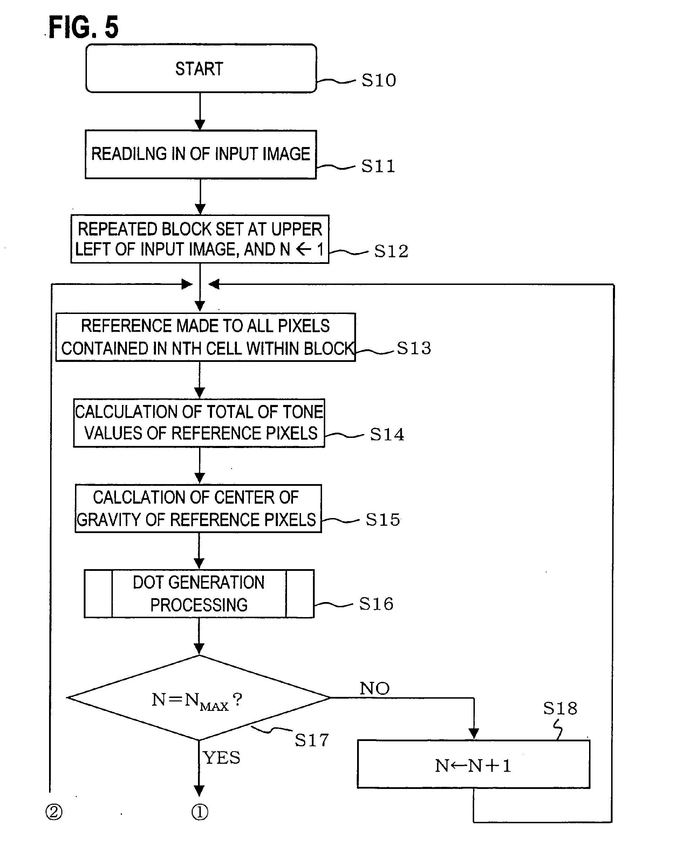

Details of the halftone processing according to the present invention is described with reference to the associated figures. Figs. 5 to 7 are flowcharts showing the processing operation.

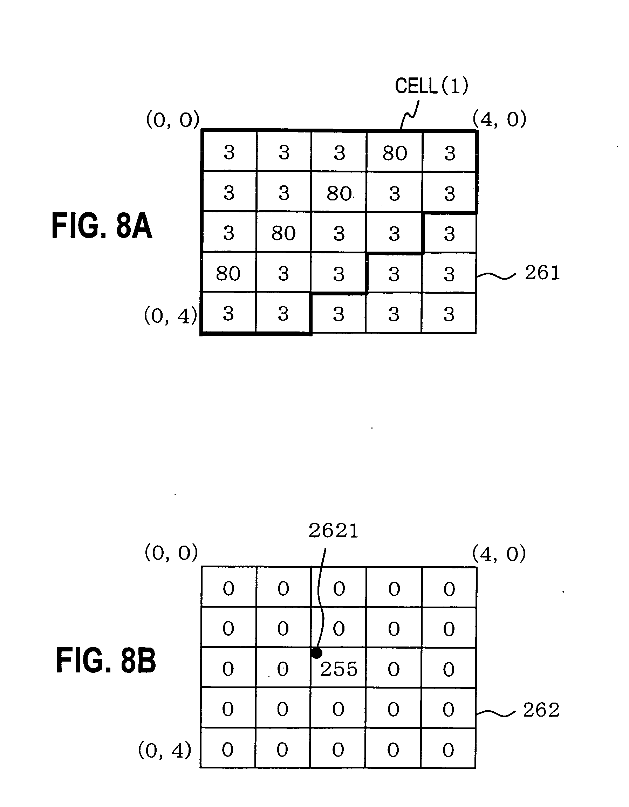

As is shown in Fig. 5, processing is initiated as a result of the CPU 24 reading out the program used to execute this processing from the ROM 25 (step S10). Then, the CPU 24 performs processing that reads the input images 100 into the RAM 26 (step S11). For example, the respective tone values of each input image 100 are stored in an input buffer region 261 disposed in a specified region of the RAM 26. An example of this is shown in Fig. 8A. The respective coordinate positions of this input buffer region 261 correspond to the respective pixel positions of the overall image; accordingly, the coordinate position of (0, 0) corresponds to the pixel positioned at (0, 0) in the overall image. Furthermore, the values stored in the respective coordinate positions indicate the input tone values of the corresponding pixels. The example shown in Fig. 8A is an example of an image in which a fine line is present at the upper left end of the input image 100. Furthermore, the input buffer region 261 is indicated by an example with 5 rows and 5 columns. However, this is done in order to facilitate description; for example, a construction that can store an image corresponding to one page (one frame) may be used, or a construction with fewer rows and columns than this figures may be used.

Returning now to Fig. 5, the CPU 24 next sets a repeating block at the upper left of the input image 100, and substitutes "1" for N (step S12). Specifically, the cell block 251 for the upper left end is prepared in the upper left end block $Bk_{11}$ of the input image 100, and "1" is substituted for N indicates the cell numbers within the cell block 251. The reason for this is that processing is initiated from the region of the upper left end portion of the input image 100. In the example shown in Fig. 8A, the number 1 cell of the cell block 251 for the upper left end (hereafter referred to as "cell (1)") is applied to this region 261.

Next, the CPU 24 refers to all of the pixels contained in the Nth cell within the block (step S13). In the example shown in Fig. 8A, this means reference to all of the pixels contained in the cell (1). The frame of this cell (1) is indicated by a thick line in Fig. 8A. Here, for example, the pixels contained in the respective cells, to which reference is to be made, are listed by the coordinate positions, and this information is stored in the ROM 25 (or RAM 26). Furthermore, during the processing performed in this step S13, reference is made to the pixels that are read out by the CPU 24 and contained in the cell. In the example shown in Fig. 8A, (0, 0), (1, 0), ... (4, 0), (0, 1), ..., (1, 4) are listed as the pixels contained in the cell (1), and are stored in the ROM 25. The same is true of the other cells (N) within the cell block 251.

Next, the CPU 24 calculates the total of the tone values of the reference pixels in the cell (step S14). The reason for this is that this is necessary in the subsequent processing that calculates the position of the center of gravity. In the example shown in Fig. 8A, the total of the tone values within the cell (1) is "365". This total value is stored in (for example) a specified region of the RAM 26 by the CPU 24.

Next, the CPU 24 calculates the center of gravity of the reference pixels (step S15). This is done in order to perform processing that generates dots on the basis of the position of the center of gravity. The calculation of the position of the center of gravity uses the following formulae.

[Equation 1]

$$X_{center\ of\ gravity} = \Sigma\{(X\ coordinates\ of\ respective\ pixels) \times (tone\ values\ of\ respective\ pixels)\}/total\ of\ tone\ values\ within\ cell$$

$$Y_{center\ of\ gravity} = \Sigma\{(Y\ coordinates\ of\ respective\ pixels) \times (tone\ values\ of\ respective\ pixels)\}/total\ of\ tone\ values\ within\ cell$$

($X_{center\ of\ gravity}$ and $Y_{center\ of\ gravity}$ indicate the coordinates of the positions of the center of gravity)

As is shown in Equation 1, the values obtained by multiplying the respective coordinate positions by the tone values of the corresponding pixels are calculated for all of the reference pixels within the cell, and the sum of these values is divided by the total value of the tone values within the cell (i.e., the value calculated in step S15). For example, this Equation 1 is stored in the ROM 25; then, during this processing, the CPU 24 reads this out from the ROM 25 and performs the calculations. In the example shown in Fig. 8A, ($X_{center\ of\ gravity}$, $Y_{center\ of\ gravity}$) ≅ (1.51, 1.51). For example, the calculated position of the center of gravity is stored in the RAM 26.

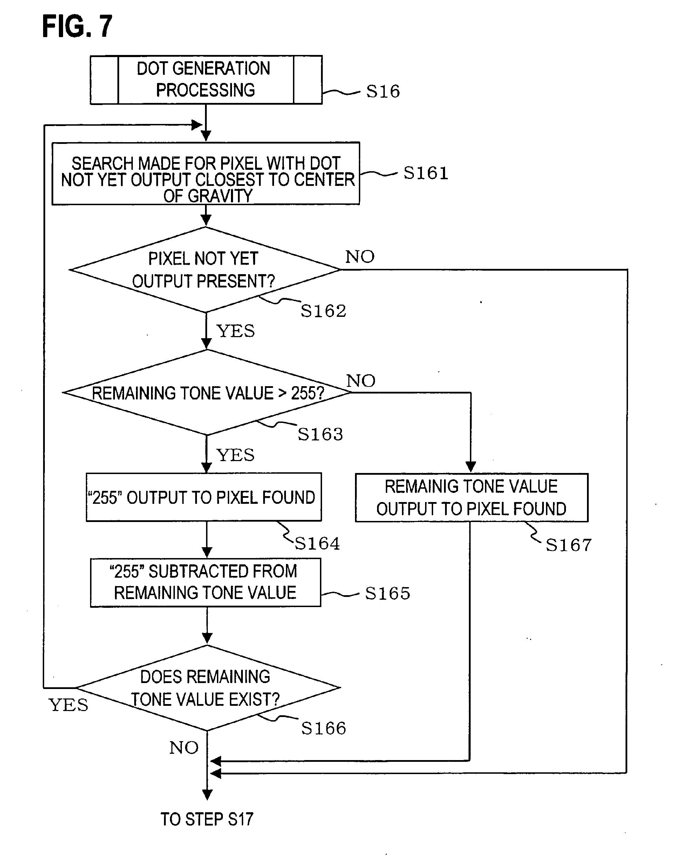

Returning now to Fig. 5, the CPU next performs dot generation processing (step S16). Specifically, processing is performed which indicates the pixel positions (from the position of the center of gravity) in which dots are to be generated. Details of the dot generation processing are shown in Fig. 7. When the processing shifts to this dot generation processing (step S16), the CPU 24 first searches for the pixel with no dot output as of yet that is closest to the position of the center of gravity (step S161). Fig. 8B shows an example of the output buffer region 262 disposed in a specified region of the RAM 26. This output buffer region 262 is a memory that is used to store values indicating the presence or absence of dot production; as in the case of the input buffer region 261, the respective coordinate positions correspond to the respective pixel positions of the overall image. Furthermore, "0" is stored beforehand in the total area of this output buffer region 262. Here, pixels in which a dot has not yet been output are pixels in which "0" indicting the absence of a dot are stored beforehand. The search for pixels in which a dot has not yet been output can be accomplished from the output buffer region 262. In the example shown in Fig. 8A, the coordinates of the position of the center of gravity are (1.51, 1.51); accordingly, a search is made for a pixel with no output as of yet that is positioned at the coordinates of (2, 2). Furthermore, in order to facilitate understanding, the position 2621 of the center of gravity is shown in Fig. 8B.

Returning now to Fig. 7, the CPU 24 next judges whether or not there are pixels that have no output as of yet (step S162). Since the pixel (2, 2) found in the example shown in Fig. 8B is a pixel in which no dot has yet been output, a judgment of "YES" is made in this step, and the processing goes to step S163.

In step S163, the CPU 24 judges whether or not the remaining tone values are greater than "255" (step S163). In the example shown in Fig. 8B, the total value of the tone values is "365", and no subtraction of tone values has been performed at this point in time; accordingly, the remaining tone value is "365". Consequently, "YES" is selected in this step S163, and the processing goes to step S164.

In step S164, the CPU 24 outputs "255" into the pixel found. Specifically, "255" is stored at the coordinate position corresponding to the pixel found in the output buffer region 262. In the present embodiment, this "255" is a value that expresses the production of dots for one pixel as a whole. As is shown in Fig. 8B, "255" is stored in the coordinate position (2, 2).

Next, the CPU 24 subtracts "255" from the remaining tone value (step S165). In the example shown in Fig. 8B, when "255" is subtracted from "365", the result is "110". The remaining tone value following subtraction is also stored in the RAM 26.

Next, the CPU 24 judges whether or not there is any remaining tone value (step S166). Since the remaining tone value following subtraction in step S165 is stored in the RAM 26, such a value is read out, and a judgment can be made as to whether or not this value is "0". If there is a remaining tone value ("YES" in the present step), the processing again goes to step S161, and the abovementioned processing is repeated. On the other hand, if there is no remaining tone value ("NO" in the present step), the dot generation processing is ended, and the processing goes to step S17 in Fig. 5.

Specifically, in the processing from step S161 through step S166, "255" is output in order from the pixel with no dot output as of yet that is closest to the center of gravity, and this is repeated until the total value of the tone values within the cell is eliminated. Accordingly, in cases where the total value of the tone values within the cell is large, the number of pixels to which "255" is output is correspondingly large, so that the generation of dots is increased. In cases where the total value is small, the generation of dots is conversely reduced. Accordingly, dots corresponding to the size of the input tone values within the cell can be generated.

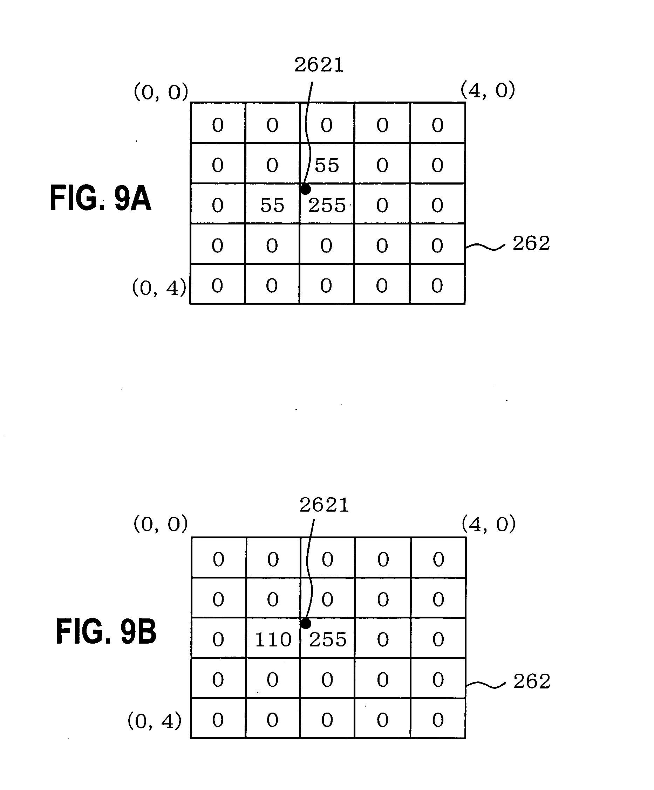

On the other hand, in case where the remaining tone value is equal to or less than "255" ("NO" in step S163), the remaining tone value is output to the pixels found (step S167). In the example shown in Fig. 8B, the remaining tone value is "110", which is equal to or less than "255"; accordingly, this remaining tone value "110" is output to the pixel with no dot output as of yet that is closest to the center of gravity. There are two pixels with no dot output as of yet, i.e., the pixels positioned as (2, 1) and (1, 2), that are closes to the position (1.51, 1.51) of the center of gravity. In this case, the remaining tone value "110" may be equally output to the two pixels as shown in Fig. 9A, or this value may be output to one of the pixels as shown in Fig. 9B. Then, the dot generation processing (step S16) is ended, and the processing goes to step S17 in Fig. 5.

Furthermore, in cases where a search is made for the pixels with no dot output as of yet that are closest to the center of gravity, but no pixel with no output as of yet is found ("NO" in step S162), this means that values indicating dot generation are stored for all of the pixels within the cell; accordingly, the present dot generation processing is ended, and the processing goes to step S17.

In the dot generation processing (step S16), as was described above, the processing is devised so that values indicating dot generation are output in order from the pixel closest to the position of the center of gravity on the basis of the total value of the tone values within the cell. Accordingly, the dots are grown in the form of a circle centered on the position of the center of gravity, so that the probability of producing coherent dots is increased.

In the case of a laser printer, a latent image is formed by irradiating the photosensitive drum with laser light inside the exposure unit; however, for example, in cases where the system is devised so that dots corresponding to one pixel are formed, there are cases where the dot width is too small when the toner is caused to adhere to the photosensitive drum on which this latent image is formed, so that favorable adhesion of the toner cannot be achieved. There may also be cases in which dots are not formed in the proper positions on the paper on which the images are reproduced by printing. Specifically, since the reproducibility of isolated dots is unstable, such dots lead to a deterioration in the quality of the image.

On the other hand, if the system is devised so that coherent dots that are as large as possible (corresponding to three pixels, four pixels or the like) are formed, problems such as the failure of dots to be formed due to the inability of achieving favorable adhesion of the toner can be solved, so that image deterioration can be prevented. In the present invention, therefore, the system is devised so that successive dots are generated in order centered on the position of the center of gravity, thus preventing the generation of isolated dots.

Returning again to Fig. 5, when the dot generation processing (step S16) is completed, a judgment is then made as to whether or not the cell number N is $N_{MAX}$ (step S17). $N_{MAX}$ is the maximum value of the number of cells contained in the cell blocks 251 through 254. Here, a judgment is made as to whether or not the processing from step S13 to step S16 has been completed for all of the cells in the respective cell blocks 251 through 254. For example, this $N_{MAX}$ is stored in the ROM 25 (or RAM 26); then, in this step, the CPU 24 appropriately reads out this value, and performs processing by comparing this value with the value of the cell number N that is stored in the RAM 26.

In cases where the cell number N is not equal to $N_{MAX}$ ("NO" in step S17), the CPU 24 next adds 1 to the cell number N (step S18), and repeats the abovementioned processing for the next cell (i.e., the processing goes to step S13). In the example shown in Figs. 9A and 9B, processing has been completed for the first cell; accordingly, the abovementioned processing (from step S13 to step S17) is repeated for the second cell.

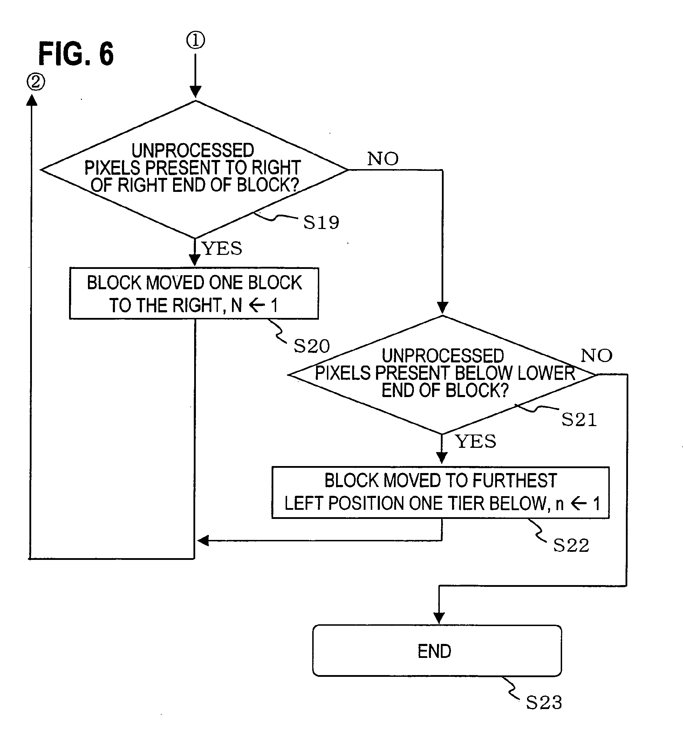

On the other hand, in cases where the cell number N is equal to $N_{MAX}$ ("YES" in step S17), i.e., in cases where the abovementioned processing has been completed for all of the cells in the single cells blocks 251 through 254, the processing goes to step S19 in Fig. 6, and a judgment is made as to whether or not there are unprocessed pixels to the right of the right end of the block (step S19). For example, in the example shown in Figs. 9A and 9B, since the processing is processing of the upper left end block $Bk_{11}$ (see Fig. 4) of the input image 100, the block $Bk_{12}$ which contains unprocessed pixels is present on the right side of the block $Bk_{11}$; accordingly, "YES" is selected in this step.

If unprocessed pixels are present to the right of the right end of the block ("YES" in step S19), the processing moves one block to the right, and substitutes "1" for the cell number N for which the abovementioned processing is to be performed within the block (step S20). Specifically, processing is first performed for the upper left end block $Bk_{11}$; next, processing of the block $Bk_{12}$ that is adjacent to this block on the right (the processing from step S13 to step S18) is performed, so that the block that is the object of processing is successively moved to the right one block at a time. Furthermore, in regard to the listed coordinate positions of the respective cells contained in the upper end cell block 252, these are all the same among the respective blocks 252 applied to the respective upper end blocks $Bk_{21}$ through $Bk_{m1}$ of the input image 100. Specifically, the coordinate positions within the upper end cell block 252 applied in the block $Bk_{21}$ and the block $Bk_{31}$ of the input image 100 are the same. However, in the block $Bk_{21}$ and the block $Bk_{31}$ of the input image 100, the coordinate positions of the respective pixels are different. Accordingly, a distance (offset value) equal to the width of the block $Bk_{21}$ is added to the coordinate positions of the respective cells of the upper end cell block 252, and the upper end cell block 252 is applied to the block $Bk_{31}$. Furthermore, for the block $Bk_{41}$, a distance equal to the width of the block $Bk_{31}$ is added to the coordinate positions of the respective cells of this calculated upper end cell block 252. The coordinate positions of the respective cells of the upper end cell block 252 applied to the respective upper end blocks $Bk_{21}$ through $Bk_{m1}$ are determined by successively repeating this operation. As a result, in regard to the upper end cell block 252, it is not necessary to provide coordinate positions within different cells for each cell block 252 that is applied to the respective blocks $Bk_{21}$ through $Bk_{m1}$; accordingly, the required memory capacity (of the ROM 25 and the like) can be reduced. The situation is exactly the same with regard to the cell block 253 used for the left end and the cell block 254 used for ordinary regions.

Returning to Fig. 6, in cases where there are no unprocessed pixels to the right of the right end of the block ("NO" in step S19), the CPU 24 next judges whether or not there are any unprocessed pixels below the lower end of the block (step S21). For example, the block is successively moved to the right from the upper left end block $Bk_{11}$, and when the processing of the upper right end block $Bk_{m1}$ (see Fig. 4) is completed, there are no unprocessed pixels located to the right ("NO" in step S19); accordingly, the processing goes to the present step S21. In this case, since pixels that have not yet been processed are located below the lower end of the block $Bk_{m1}$, "YES" is selected.

Here, in regard to the upper end cell block 252 that is applied to the upper right end block $Bk_{m1}$ of the input image 100, as is shown in Fig. 3B, there are no cells to be applied that are adjacent on the right to the cells that are positioned furthest to the right (the cell (7), cell (13) and the like). The reason for this is that there are no input pixels located on the right side from the vicinity of the center of the cell (7). In other words, the right end of the input image 100 is located with the vertical direction as a boundary from the vicinity of the center of the cell (7). In cases where the right end of the input image 100 is positioned further to the right than the cell (7) or cell (13), the upper end cell block 252 is again applied to this region; if there are no input pixels, then processing may be omitted. This is also true of the left end cell block 253 that is applied to the block $Bk_{1n}$ and the cell block 254 for ordinary regions that is applied to the block $Bk_{mn}$.

Returning to Fig. 6, if unprocessed pixels are present below the lower end of the block ("YES" in step S21), next moves the block to the leftmost position one tier below, substitutes "1" for the cell number N to be processed in this block, and goes to step S13. For example, when processing is completed up to the block $Bk_{m1}$ (see Fig. 4), processing (i.e., the processing from step S13 to step S18) is next performed for the block $Bk_{12}$ that is positioned furthest toward the left end below.

On the other hand, in cases where there are no unprocessed pixels below the lower end of the block ("NO" in step S21), the series of processing operations described above is ended (step S23). For example, when processing in the block $Bk_{mn}$ that is positioned furthest to the lower right is completed, there are no unprocessed pixels located to the right of the right end of this block $Bk_{mn}$ ("NO" in step S19), and there are no unprocessed pixels located below the lower end of the block $Bk_{mn}$ ("NO" in step S21); accordingly, processing for all of the blocks of the input image 100 has been completed.

The processing from step S19 through step S22 is processing that relates to the manner of movement of the blocks. Besides such a movement method, for example, there may also be cases in which movement is successively performed to blocks on the left side from the upper right end block $Bk_{m1}$, and processing is performed by immediately moving to the block at the lower right end when the block furthest to the left has been reached, and cases in which processing is performed by successively moving to blocks on the right from the lower left end block $Bk_{1n}$, and then immediately moving to blocks above.

Furthermore, output values indicating the presence or absence of dot generation stored in the output buffer region 262 are output from the halftone processing part 211 (see Fig. 1) to the pulse width modulating part 212 as quantized data. Then, a pulse width is produced on the basis of these values, and a printed image is formed on printing paper or the like. For example, in the case of pixels for which "255" is output, a pulse width corresponding to one pixel is produced, in the case of "128", a pulse width corresponding to half of one pixel is produced, in the case of "64", a pulse width of 4/1 is produced, and so on. Specifically, the output values stored in the output buffer region 262 express dot regions that are toner beam adhesion regions, and express not only the presence or absence of dot generation, but also the size of the dots. More tone expressions (brightness expressions) are possible, and this is widely used in laser printers. In the present embodiment, pulses with "256" gradations are produced in the pulse width modulating part 212. Of course, pulses with a greater number of gradations or pulses with a smaller number of gradations may also be produced.

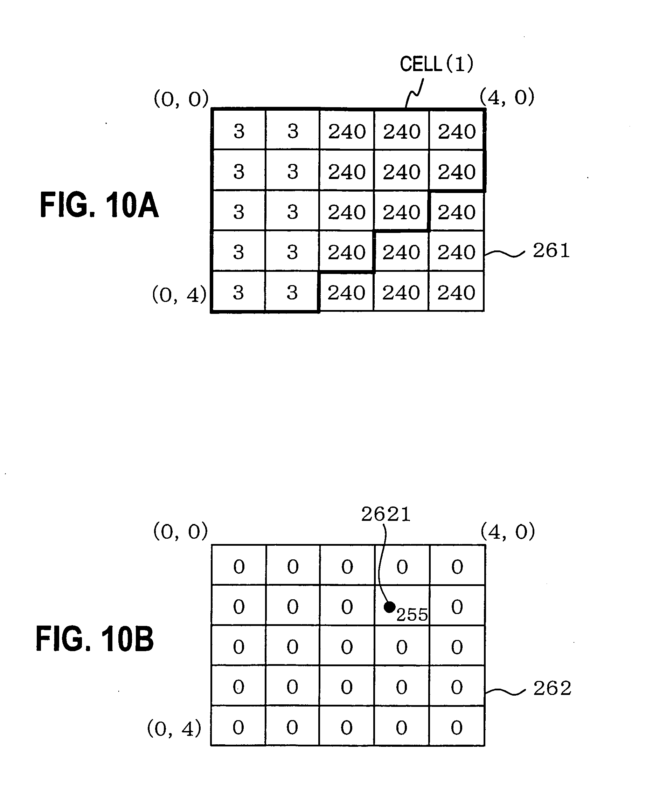

In the example shown in Figs. 8 and 9, the generation of dots was described using an example of an image in which thin lines were present in a diagonal pattern. Next, the generation of dots in a so-called edge region in which the input tone values show a sudden variation will be described. This example will be described with reference to Fig. 10 and subsequent figures.

Since details of the processing have already been described, the example shown in Fig. 10 and the subsequent figures will be described briefly. As is shown in Fig. 10A, the reading in of the input image 100 is accomplished by storing the input tone values in the input buffer region 261 (step S11). Then, the cell (1) of cell number 1 of the upper left end cell block 251 is applied to this region (steps S12 and S13). Of course, the cell size is fixed in order to make processing faster. The total of the tone values within the cell (1) is "2190" (step S14), and when the position of the center of gravity is calculated using Equation 1, $(X_{center\ of\ gravity}, Y_{center\ of\ gravity}) \approx (2.75, 1.12)$ (step S15).

Then, the processing goes to dot generation processing (step S16), and a search is made for pixels not yet processed for dots that are positioned in the position of the center of gravity (step S161). First, the pixel (3, 1) is found. Since this pixel position is a pixel for which a dot has not yet been output (a pixel in which "0" is stored), "255" is output in this pixel position ("YES" in both steps S162 and S163; step S164). An example of this is shown in Fig. 10B. Next, when "255" is subtracted from the total "2190" of the tone values, a value of "1935" is obtained (step S165). Then, since there is a remaining tone value ("YES" in step S166), a search is again made for the pixel not yet output that is closest to the center of gravity (step S161).

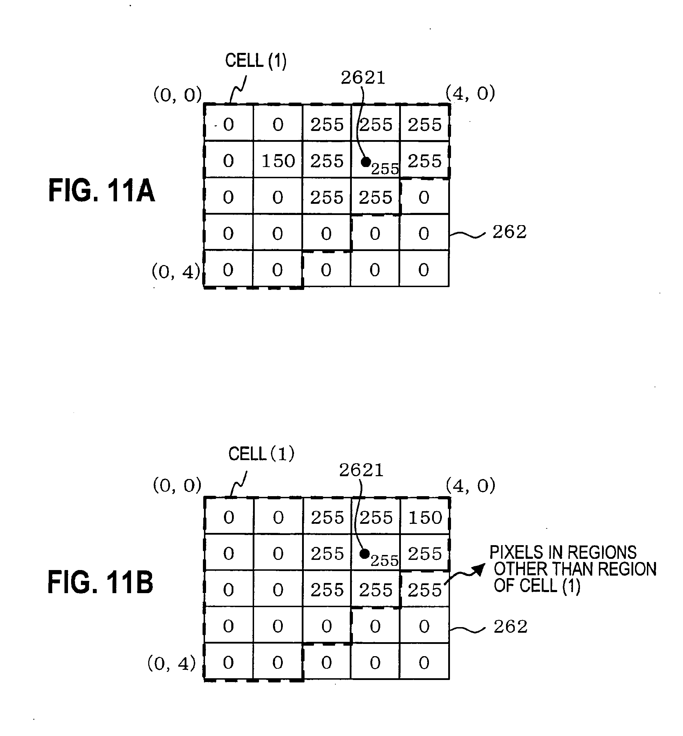

The state shown in Fig. 11A is attained by repeating this operation. Furthermore, in the example shown in this figure, the system is devised so that a search is made for pixels in which dots have not yet been output within the cell (1) (indicated by a dotted line in the figures) when a search is made for the pixel that is closest to the position of the center of gravity. However, it is not absolutely necessary to search for pixels in which dots have not yet been output within the cell; it would also be possible to search for pixels in which dots have not yet been output in regions other than the region of the cell (1), and to output values indicating the generation of dots to these pixels, as shown in Fig. 11B. Furthermore, the final remaining tone value is "150"; this is output to the pixel position of (1, 1) in the example shown in Fig. 11A, and to the pixel position of (4, 0) in the example shown in Fig. 11B.

As is shown in Figs. 11A and 11B, dots are disposed in a cluster centered on the position of the center of gravity in this edge region as well; accordingly, stable dot reproduction can be accomplished compared to the case of isolated dots. Furthermore, in regard to edge reproducibility as well, Figs. 11A and 11B are both faithful to the input tone values, and show a good resolution. The example shown in Fig. 11B, which does not adhere strictly to a search for pixels in which dots have not yet been output, is especially favorable.

Furthermore, when the halftone processing of the present invention is applied to flat images in which there is no variation in the input tone values, since the size of the respective cells is substantially uniform, the variation in the inter-dot distance produced in adjacent cells is reduced. Accordingly, visually favorable images are formed. In this case as well, since the system is devised so that dots centered on the position of the center of gravity are generated, the generation of isolated dots is prevented; furthermore, since the cell size is also fixed, it goes without saying that the processing is faster.

Moreover, as is clear from Fig. 3 and the like, the pixels constituting the respective cells are positioned adjacent to each other inside these cells. For example, isolated dots are generated in the converse of a scattered presence; e.g., some of the dots constituting the cell (1) are present in the position of (100, 0). As a result of the cells being constructed as shown in Fig. 3 and the like, the cells have a coherent area; accordingly, the generation of isolated dots can be suppressed. Furthermore, since the pixels are adjacent to each other, information relating to the coordinate positions of the pixels positioned inside the cells can be reduced. Accordingly, the position information stored in the ROM 25 or the like is also reduced, so that the required memory capacity can be reduced.

As was described above, the present invention makes it possible to prevent the generation of isolated dots, and to generate stable dots; furthermore, the present invention makes it possible to realize halftone processing with a fast processing speed.

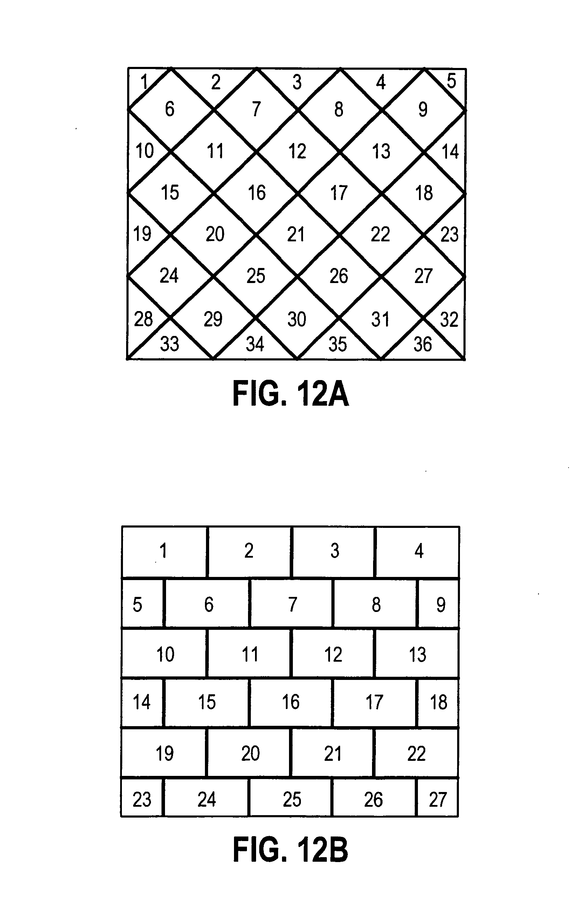

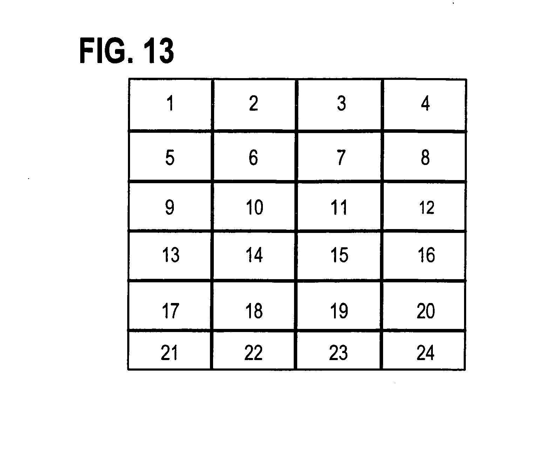

In the examples described above, blocks consisting of circular cell frames were described as examples of the cell blocks 251 through 254; however, cell blocks that have diamond-shaped cell frames as shown in Fig. 12A may also be used. Alternatively, as is shown in Fig. 12B, square cell frames in a disposition in which the tops and bottoms are shifted may also be used, or cell blocks in which square cell frames are disposed with the tops and bottoms aligned (as shown in Fig. 13) may also be used. In short, it is sufficient if the cells are constructed so that there are no gaps between respective cell blocks. In such cases as well, the same effects and merits as in the examples described above can be obtained.

Furthermore, in the above examples, halftone processing for monochromatic data was described; however, processing for color data may also be performed. In this case, RGB (red, green and blue) tone data is input into the image processing device 20 from the host computer 10, and a CYMK (cyan, magenta, yellow and black) color conversion is performed in the image processing device 20, so that the abovementioned processing is performed for each of the respective colors.

Furthermore, the abovementioned halftone processing may also be performed by the host computer 10. In this case, the quantized data following the abovementioned halftone processing is input into the image processing device 20 from the host computer 10, and pulse width modulation is performed by the image processing part 21. In this case, the host computer 10 functions as the image processing device of the present invention.

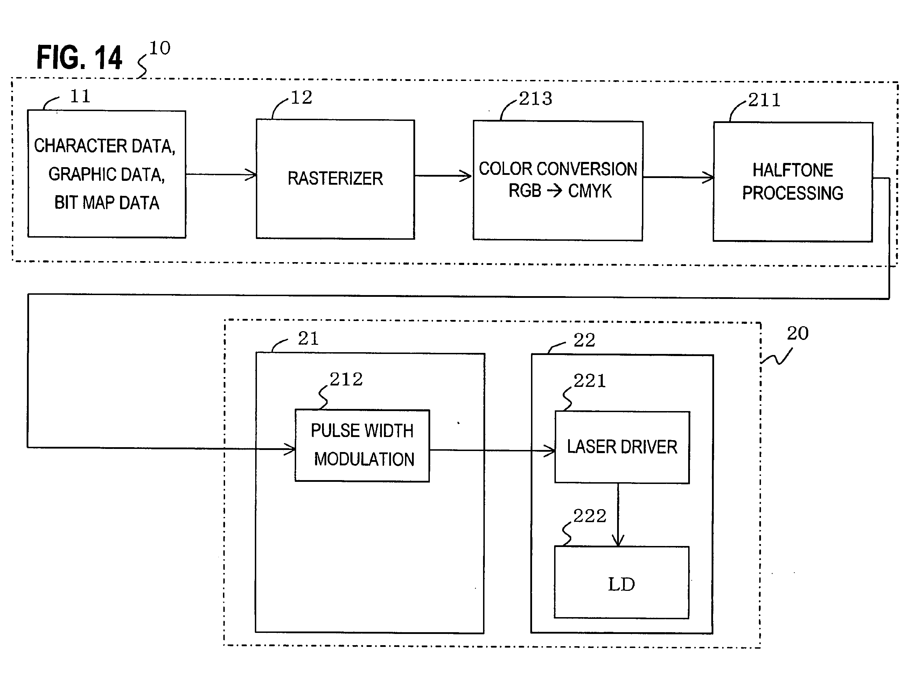

Furthermore, as is shown in Fig. 14, the system may also be devised so that color conversion processing and the halftone processing of the present invention are performed by the host computer 10, and processing for color data is performed by the host computer 10. In this case, the quantized data is output to the image processing device 20; then, processing such as pulse width modulation and the like is performed, and printing is performed.

Furthermore, in the examples described above, the system had level values of "0" to "255" as input tone values; furthermore, the example of output tone values also had level values of "0" to "255". Besides this, however, various types of level values such as "0" to "127" or the like might also be used as both input and output values. Generally, in cases where the input tone values have N types of level values (N is an integer), it is sufficient if the output tone values have M types of level values (M is also an integer, $M \geq N$).

Furthermore, in the examples described above, in regard to the pixels contained in the cells, processing was described in which the coordinate positions of these pixels were listed; besides this, however, it would also be possible (for example) to perform processing based on a matrix in which cell numbers indicating the numbers of the cells to which the pixels in respective positions belong is recorded. For example, such a matrix is stored in the ROM 25 or the like, the cell in which each pixel is contained is ascertained by the CPU 24 by superimposing this matrix and the input data, and processing is performed by calculating the position of the center of gravity in each cell. Exactly the same effect can also be obtained in this case.

Furthermore, as examples of the image processing device 20, besides the abovementioned printer, exactly the same effect can also be obtained in the case of a facsimile device or copier, or a so-called composite machine that has both of these functions. Moreover, the host computer 10 may be a personal computer, portable telephone, PDA (personal digital assistant), digital camera or other portable information terminal.

**Claims**

1. An image processing device which converts input image data into output image data having two or more types of level values, and outputs the output image data, comprising:

   a center-of-gravity position determining unit which determines the position of the center of gravity, on the basis of a predetermined pixel group, from the input image data for the respective pixels contained in the pixel group; and

an application unit which applies the level values to pixels on the basis of the position of the center of gravity determined by the center-of-gravity position determining unit.

2. The image processing device according to claim 1, further comprising a pulse width modulation unit which produces K stages (K is a positive integer) of pulse widths for the level values applied by the application unit.

3. The image processing device according to claim 1, wherein the center-of-gravity position determining unit calculates the product of the pixel positions of the respective pixels and the level values of the input image data for the respective pixels for all of the pixels contained in the pixel group, and determines the value obtained by dividing the sum of these by the total value of the level values of the input image data for the respective pixels contained in the pixel group as the position of the center of gravity.

4. The image processing device according to claim 1, wherein application unit preferentially selects level values from pixels that are close to the position of the center of gravity, and applies level values to the selected pixels.

5. The image processing device according to claim 1, wherein the application unit is devised so that when the application unit applies a level value to the pixel that is closest to the position of the center of gravity, if there is a remainder in the level value after the applied level value is subtracted from the total value of the level values of the respective pixels contained in the pixel group, the remaining level value is applied to the pixel that is closest to the position of the center of gravity other than the pixel to which the level value is applied.

6. The image processing device according to claim 5, wherein in cases where the remaining level value is not a level value that causes the generation of dots for a single pixel, the application unit applies the remaining level value to the pixel, which is contained in the pixel group, and which is closest to the position of the center of gravity other than the pixel to which the level value has been applied.

7. The image processing device according to claim 1, wherein the center-of-gravity position determining unit determines the pixel group beforehand by holding coordinate positions of the respective pixels contained in the pixel group.

8. The image processing device according to claim 1, wherein the respective pixels contained in the pixel group are adjacent to each other.

9. An image processing method which converts input image data into output image data having two or more types of level values, and outputs the output image data, comprising the steps of:

a center-of-gravity position determination step which determines the position of the center of gravity, on the basis of a predetermined pixel group, from input image data for the respective pixels contained in the pixel group; and
an application step which applies level values to the pixels on the basis of the position of the center of gravity determined in the center-of-gravity position determination step.

10. A program for processing that converts input image data into output image data having two or more types of level value, and outputs the output image data, the program causing a computer to execute:

a center-of-gravity position determining processing which determines the position of the center of gravity on the basis of a predetermined pixel group from input image data for the respective pixels contained in the pixel group; and
an application processing which applies level values to the pixels on the basis of the position of the center of gravity determined by the center-of-gravity position determining processing.

11. A dot image generating device which generates dot images by converting input image data into output image data that has two ore more types of level values, comprising:

a center-of-gravity position determining unit which determines the position of the center of gravity on the basis of a predetermined pixel group from the input image data for the respective pixels contained in this pixel group; and
an application unit which applies the level values to the pixels on the basis of the position of the center of gravity determined by the center-of-gravity position determining unit.

12. A dot image generating method which generates dot images by converting input image data into output image data having two or more types of level values, comprising the steps of:

a center-of-gravity position determination step which determines the position of the center of gravity, on the basis of a predetermined pixel group, from input image data for the respective pixels contained in the pixel group; and
an application step which applies the level values to the pixels on the basis of the position of the center of gravity determined in the center-of-gravity position determination step.

13. A program for dot image generating processing that generates dot images by converting input image data into output image data having two or more types of level values, the program causing a computer to execute:

a center-of-gravity position determining processing which determines the position of the center of gravity, on the basis of a predetermined pixel group, from input image data for the respective pixels contained in this pixel group; and
an application processing which applies level values to the pixels on the basis of the position of the center of gravity determined in the center-of-gravity position determining processing.

14. An image processing device comprising:

an assigning unit which assigns predetermined cells containing a plurality of pixels of input image data to input image data;
a determining unit which determines the position of the center of gravity within the cell from the tone values of the plurality of pixels within the cell; and
a generating unit which generates dots corresponding to the sum of the tone values of the plurality of pixels within the cell in at least pixels containing the position of the center of gravity.

# FIG. 1

HOST COMPUTER 10

11
CHARACTER DATA,
GRAPHIC DATA,
BIT MAP DATA

12
RASTERIZER

IMAGE PROCESSING DEVICE 20

IMAGE PROCESSING PART 21

PRINTING ENGINE 22

211
HALFTONE
PROCESSING

212
PULSE WIDTH
MODULATION

221
LASER DRIVER

222
LD

# FIG. 2

IMAGE PROCESSING DEVICE 20

INPUT I/F 23

CPU 24

ROM 25

RAM 26

PRINTING ENGINE 22

FIG. 3A

FIG. 3B

FIG. 3C

FIG. 3D

**FIG. 4**

## FIG. 5

```
          ┌─────────────────────────┐
          │          START          │─── S10
          └─────────────────────────┘
                       │
                       ▼
          ┌─────────────────────────┐
          │ READILNG IN OF INPUT IMAGE │─── S11
          └─────────────────────────┘
                       │
                       ▼
          ┌─────────────────────────┐
          │ REPEATED BLOCK SET AT UPPER │
          │ LEFT OF INPUT IMAGE, AND N ← 1 │─── S12
          └─────────────────────────┘
                       │
                       ▼ ◄──────────────────────────┐
          ┌─────────────────────────┐                │
          │ REFERENCE MADE TO ALL PIXELS │            │
          │ CONTAINED IN NTH CELL WITHIN BLOCK │─── S13 │
          └─────────────────────────┘                │
                       │                              │
                       ▼                              │
          ┌─────────────────────────┐                │
          │ CALCULATION OF TOTAL OF TONE │            │
          │ VALUES OF REFERENCE PIXELS │─── S14       │
          └─────────────────────────┘                │
                       │                              │
                       ▼                              │
          ┌─────────────────────────┐                │
          │ CALCLATION OF CENTER OF  │                │
          │ GRAVITY OF REFERENCE PIXELS │─── S15      │
          └─────────────────────────┘                │
                       │                              │
                       ▼                              │
          ┌──┬──────────────────┬──┐                 │
          │  │  DOT GENERATION   │  │                 │
          │  │    PROCESSING     │  │─── S16          │
          └──┴──────────────────┴──┘                 │
                       │                              │
                       ▼                              │
              ◇─────────────────◇     NO             │
             ╱                   ╲─────────┐          │
            ◇   N = N_MAX ?       ◇        │   S18    │
             ╲                   ╱         ▼     ╲    │
              ◇─────────────────◇   ┌────────────┐   │
                       │ └ S17      │  N ← N+1   │───┘
                      YES           └────────────┘
                       │
      ②               ▼
                      ①
```

$N = N_{MAX}$ ?
$N \leftarrow N+1$

# FIG. 6

① ②

UNPROCESSED PIXELS PRESENT TO RIGHT OF RIGHT END OF BLOCK? — NO

S19

YES

BLOCK MOVED ONE BLOCK TO THE RIGHT, N ← 1

S20

UNPROCESSED PIXELS PRESENT BELOW LOWER END OF BLOCK? — NO

S21

YES

BLOCK MOVED TO FURTHEST LEFT POSITION ONE TIER BELOW, n ← 1

S22

END

S23

# FIG. 7

```
        ┌─┬──────────────────────────┬─┐
        │ │   DOT GENERATION         │ │ ～ S16
        │ │     PROCESSING           │ │
        └─┴──────────────────────────┴─┘
                      │
                      ▼
        ┌──────────────────────────────┐
        │  SEARCH MADE FOR PIXEL WITH DOT │ ～ S161
        │  NOT YET OUTPUT CLOSEST TO CENTER │
        │        OF GRAVITY             │
        └──────────────────────────────┘
                      │
                      ▼
              PIXEL NOT YET          NO
              OUTPUT PRESENT? ─────────────────────┐
                      │        S162                │
                     YES                           │
                      ▼                            │
         REMAINING TONE VALUE > 255?    NO         │
                      │           ──────────┐      │
                      │       S163          │      │
                     YES                    │      │
                      ▼                     ▼      │
        ┌──────────────────────┐  ┌──────────────────────┐
        │ "255" OUTPUT TO PIXEL │  │  REMAINIG TONE VALUE  │
        │        FOUND          │  │  OUTPUT TO PIXEL FOUND │
        └──────────────────────┘  └──────────────────────┘
                  │  ～S164              ～S167
                  ▼
        ┌──────────────────────┐
        │ "255" SUBTRACTED FROM │ ～ S165
        │  REMAINING TONE VALUE │
        └──────────────────────┘
                  │
                  ▼
            DOES REMAINING
   YES      TONE VALUE EXIST?
                  │      S166
                  NO
                  ▼
              TO STEP S17
```

CELL(1)

(0, 0)                    (4, 0)

| 3 | 3 | 3 | 80 | 3 |
| 3 | 3 | 80 | 3 | 3 |
| 3 | 80 | 3 | 3 | 3 |
| 80 | 3 | 3 | 3 | 3 |
| 3 | 3 | 3 | 3 | 3 |

**FIG. 8A**

(0, 4)

261

2621

(0, 0)                    (4, 0)

| 0 | 0 | 0 | 0 | 0 |
| 0 | 0 | 0 | 0 | 0 |
| 0 | 0 | 255 | 0 | 0 |
| 0 | 0 | 0 | 0 | 0 |
| 0 | 0 | 0 | 0 | 0 |

**FIG. 8B**

(0, 4)

262

**FIG. 9A**

2621

(0, 0)                                        (4, 0)

| 0 | 0 | 0 | 0 | 0 |
|---|---|---|---|---|
| 0 | 0 | 55 | 0 | 0 |
| 0 | 55 | 255 | 0 | 0 |
| 0 | 0 | 0 | 0 | 0 |
| 0 | 0 | 0 | 0 | 0 |

(0, 4)

262

**FIG. 9B**

2621

(0, 0)                                        (4, 0)

| 0 | 0 | 0 | 0 | 0 |
|---|---|---|---|---|
| 0 | 0 | 0 | 0 | 0 |
| 0 | 110 | 255 | 0 | 0 |
| 0 | 0 | 0 | 0 | 0 |
| 0 | 0 | 0 | 0 | 0 |

(0, 4)

262

CELL(1)

(0, 0)                                    (4, 0)

| 3 | 3 | 240 | 240 | 240 |
|---|---|-----|-----|-----|
| 3 | 3 | 240 | 240 | 240 |
| 3 | 3 | 240 | 240 | 240 |
| 3 | 3 | 240 | 240 | 240 |
| 3 | 3 | 240 | 240 | 240 |

(0, 4)

**FIG. 10A**

261

2621

(0, 0)                                    (4, 0)

| 0 | 0 | 0 | 0 | 0 |
|---|---|---|---|---|
| 0 | 0 | 0 | •255 | 0 |
| 0 | 0 | 0 | 0 | 0 |
| 0 | 0 | 0 | 0 | 0 |
| 0 | 0 | 0 | 0 | 0 |

(0, 4)

**FIG. 10B**

262

**FIG. 11A**

CELL (1)

2621

(0, 0)  (4, 0)

| 0 | 0 | 255 | 255 | 255 |
| 0 | 150 | 255 | 255 | 255 |
| 0 | 0 | 255 | 255 | 0 |
| 0 | 0 | 0 | 0 | 0 |
| 0 | 0 | 0 | 0 | 0 |

(0, 4)

262

**FIG. 11B**

CELL (1)

2621

(0, 0)  (4, 0)

| 0 | 0 | 255 | 255 | 150 |
| 0 | 0 | 255 | 255 | 255 |
| 0 | 0 | 255 | 255 | 255 |
| 0 | 0 | 0 | 0 | 0 |
| 0 | 0 | 0 | 0 | 0 |

(0, 4)

PIXELS IN REGIONS
OTHER THAN REGION
OF CELL (1)

262

**FIG. 12A**

**FIG. 12B**

## FIG. 13

| 1 | 2 | 3 | 4 |
|---|---|---|---|
| 5 | 6 | 7 | 8 |
| 9 | 10 | 11 | 12 |
| 13 | 14 | 15 | 16 |
| 17 | 18 | 19 | 20 |
| 21 | 22 | 23 | 24 |

# FIG. 14

EP 1 758 368 A1

<div align="center">

**INTERNATIONAL SEARCH REPORT**

</div>

| | International application No. |
|---|---|
| | PCT/JP2005/008342 |

| A. CLASSIFICATION OF SUBJECT MATTER |
|---|
| Int.Cl$^7$ H04N1/405, B41J2/52, G06T5/00 |
| According to International Patent Classification (IPC) or to both national classification and IPC |

| B. FIELDS SEARCHED |
|---|
| Minimum documentation searched (classification system followed by classification symbols) |
| Int.Cl$^7$ H04N1/40-1/409, H04N1/46, H04N1/60 |

| Documentation searched other than minimum documentation to the extent that such documents are included in the fields searched |
|---|
| Jitsuyo Shinan Koho      1922-1996   Jitsuyo Shinan Toroku Koho    1996-2005 |
| Kokai Jitsuyo Shinan Koho    1971-2005   Toroku Jitsuyo Shinan Koho    1994-2005 |

| Electronic data base consulted during the international search (name of data base and, where practicable, search terms used) |
|---|
| |

| C. | DOCUMENTS CONSIDERED TO BE RELEVANT | |
|---|---|---|
| Category* | Citation of document, with indication, where appropriate, of the relevant passages | Relevant to claim No. |
| X | JP 9-233332 A  (Dainippon Screen Mfg. Co., Ltd.),<br>05 September, 1997 (05.09.97),<br>Full text; all drawings<br>(Family: none) | 1-14 |
| X<br>Y | JP 3-217168 A  (Canon Inc.),<br>24 September, 1991 (24.09.91),<br>Full text; all drawings<br>(Family: none) | 1-10<br>11-14 |
| Y | JP 11-27528 A  (Ricoh Co., Ltd.),<br>29 January, 1999 (29.01.99),<br>Full text; all drawings<br>(Family: none) | 11-14 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 August, 2005 (02.08.05) | 16 August, 2005 (16.08.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| | International application No. |
|---|---|
| | PCT/JP2005/008342 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 7-210672 A  (Canon Inc.),<br>11 August, 1995 (11.08.95),<br>Full text; all drawings<br>(Family: none) | 1-14 |
| A | JP 60-29089 A  (Matsushita Research<br>Institute Tokyo, Inc.),<br>14 February, 1985 (14.02.85),<br>Full text; all drawings<br>& US 4551768 A          & GB 2129652 A<br>& GB 8328648 A0          & DE 3339002 A | 1-14 |
| A | JP 2001-45287 A  (Canon Inc.),<br>16 February, 2001 (16.02.01),<br>Full text; all drawings<br>(Family: none) | 1-14 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005008342 W
- JP 2004137326 A
- JP 11027528 A
- JP 2003352270 A

**Non-patent literature cited in the description**

- **SHUNSEI KUROZAWA et al.** Quasi-intermediate Halftone Processor Using peripheral concentration integration and redistribution method (CAPIX method. *Gazo Denshi Gakkaishi,* 1988, vol. 17 (5